# EUROPEAN PATENT SPECIFICATION

(11) **EP 1 339 517 B1**
(45) Date of publication and mention of the grant of the patent: **28.05.2008**
(21) Application number: 01999452.4
(22) Date of filing: 06.12.2001
(51) Int. Cl.: B23B 51/00

(54) **TOOL FOR MACHINING OF METALS WITH VIBRATION DAMPING MEANS**
WERKZEUG ZUR BEARBEITUNG VON METALLEN MIT SCHWINGUNGSDÄMPFUNGSMITTEL
OUTIL D'USINAGE DE METAUX DOTE D'UN MOYEN AMORTISSEUR DE VIBRATIONS

(30) Priority: 06.12.2000 SE 0004525
(43) Date of publication of application: 03.09.2003
(73) Proprietor: Sandvik Intellectual Property AB, 811 81 Sandviken (SE)
(72) Inventor: BERGHOLT, Marie-Louise, S-811 52 Sandviken (SE); KARLSSON, Leif, S-810 64 Karlholmsbruk (SE); TÜBINGER, Klas, S-811 71 Järbo (SE)
(74) Representative: Stein, Jan Anders Lennart
(86) International application number: PCT/SE2001/002691
(87) International publication number: WO 2002/045892

(56) References cited:
- EP-A2- 0 090 929
- WO-A1-01/98008
- DE-A1- 19 948 891
- SE-B- 468 930
- US-A- 4 591 009
- US-A- 5 372 548
- US-A- 6 076 999
- DATABASE WPI Week 199311, Derwent Publications Ltd., London, GB; AN 1993-092183, XP002965184 & SU 1 726 148 A1 (UNIV KUMEMBA) 15 April 1992

## Description

### TECHNICAL FIELD

The present invention relates to a tool for chip removal of metallic materials, in accordance with the pre-characterising portion of claim 1.

The present invention also relates to a damping device adapted to be arranged at such a tool, and to a set of parts, each of which being provided with at least one such damping device.

Such a tool and such a damping device is known from SE-B-468 930, respectively.

At working of holes in metallic materials, problems arise with the high sound level caused by vibrations from the working and the machine sound. Hitherto used drills have not been provided with built-in/added damping devices formed in such a way that a suitable sound and vibration damping has been feasible. The essential thing is to be able to eliminate major parts of the vibration sound in the range that is uncomfortable to the ear. If possible, only the machine sound as well as the inevitable chip rattle which normally usually amounts to 74-76 dB should be left. However, without damping it is not uncommon that levels up to 130 dB have been measured. The proper machine sound feels more restful to the ear.

By SE-B-468 930 it is, for instance, previously known to form a drilling tool with a partly vibration damping material, which has been applied in the flute of the drill's chip channels formed in the longitudinal direction. However, the hard metal borders applied according to SE-B-468 930 have not turned out to give any suitable silencing of noise.

### SUMMARY OF THE INVENTION

In these circumstances, the aim of the invention is to provide a solution to the above-mentioned problem. According to the invention, the problem has been solved by a tool as initially defined further comprises the features of the characterising portion of claim 1.

It has also been solved by a damping device according to the characterising portion of claim 5.

Hereby is achieved an apparatus for a tool with substantially improved sound and vibration damping which is useful at drilling as well as at milling or e.g. interior lathing. As a result of this, the new tool permits a substantial reduction of the sound level caused by the proper metal working of the workpiece. At the same time, such a tool becomes less sensitive to vibrations, which arise by virtue of variations of the cutting forces.

### DRAWING SUMMARY

Below, the invention will be described closer in connection with two embodiment examples of the invention illustrated in the drawings, where
Fig. 1 is a side view of a tool provided with a damping device;
Fig. 2 is a side view of a tool provided with a differently arranged damping element;
Fig. 3A is a side view of a tool provided with a differently arranged damping element;
Fig. 3B is a side view of a tool provided with a differently arranged damping element;
Fig. 3C is an end view of Fig. 3B;
Fig. 4 is a side view of a tool provided with a differently arranged damping element;
Fig. 5 is a side view of a tool provided with a differently arranged damping element;
Fig. 6 is a side view of a tool provided with a differently arranged damping element;
Fig. 7 is an end view of the Fig. 6;
Fig. 8 is a side view of a tool provided with a differently arranged damping element;
Fig. 9 is a cross-section along the line A-A of the drill shown in Fig. 8;
Fig. 10 is a side view of a tool provided with a differently arranged damping device;
Fig. 11A is a side view of a tool provided with a differently arranged damping device;
Fig. 11B is an end view of the tool shown in Fig. 11A;
Fig. 12A is a side view of a tool provided with a differently arranged damping device;
Fig. 12B is an end view of the tool shown in Fig. 12A;
Fig. 13 illustrates a milling tool provided with a damping device;
Fig. 14 is a side view of a turning bar provided with a damping device;
Figs. 15A-15B illustrate a drilling tool provided with a damping device;
Figs. 16A-16C illustrate a drilling tool provided with a differently arranged damping device;
Fig. 17 illustrates a milling tool provided with a differently arranged damping device;
Fig. 18 illustrates a turning bar provided with a differently arranged damping device;
Fig. 19 illustrates another embodiment of a drilling tool provided with a differently arranged damping device.

### DETAILED DESCRIPTION

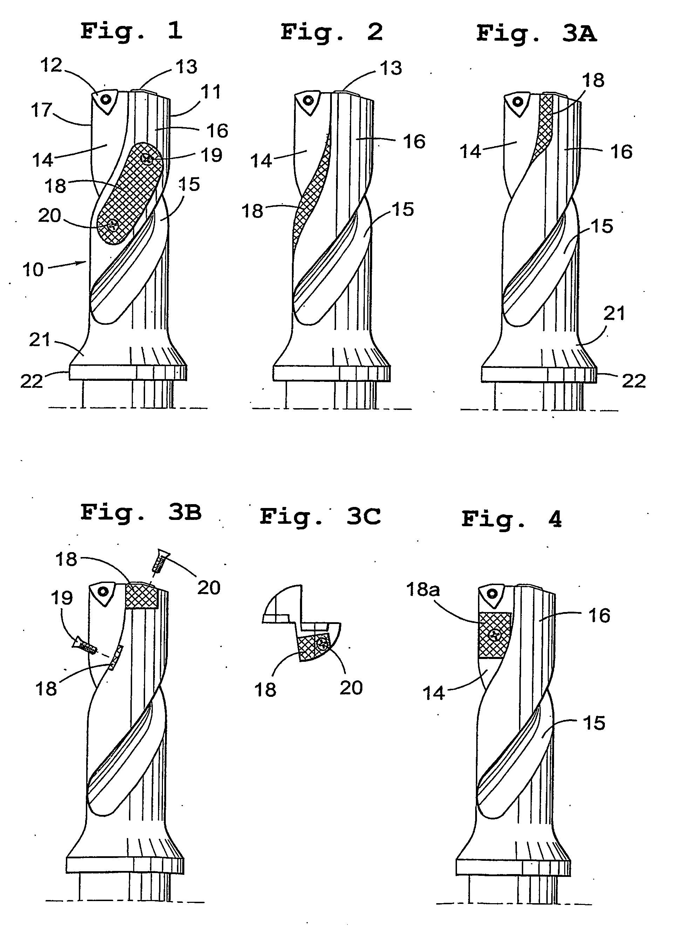

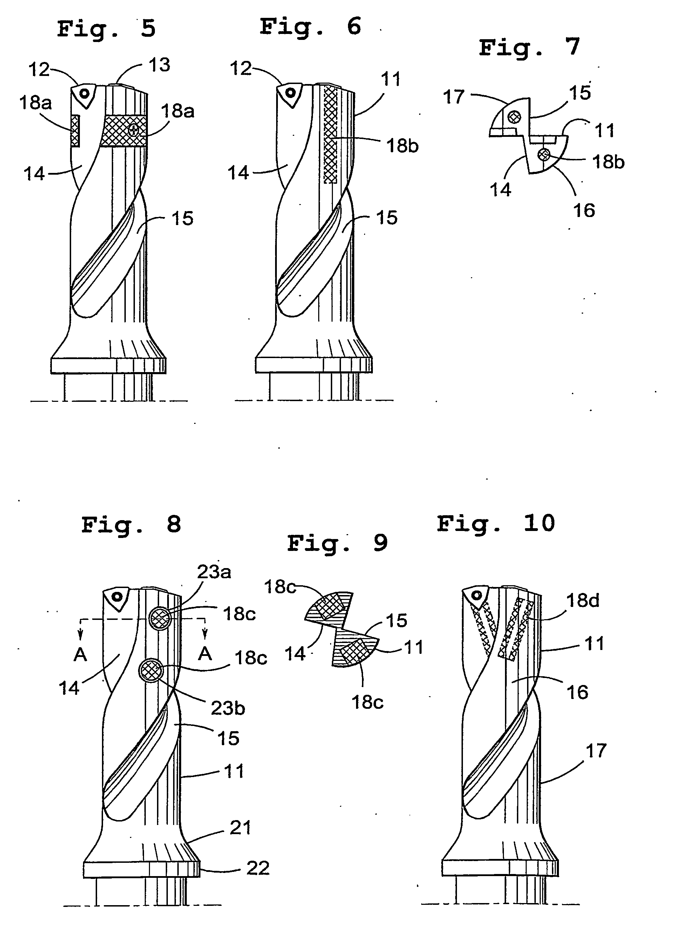

Fig. 1 shows a drill 10 having damping elements 18 comprising a drill body 11 as well as an outer cutting insert 12 situated at the periphery of the drill and an inner cutting insert 13 situated closer to the centre of the drill. The cutting inserts are preferably made of hard cemented carbide. The two cutting plates are situated in such a way at different radial distances from the drill axis A that their operating areas overlap each other. At the same time, said cutting plates are displaced about 180° in the periphery direction of the tool as shown in Fig. 7. The cutting plates 12 and 13 are, in a known way, for instance by means of a centre screw, fastened in a corresponding cutting pocket in the drill body 11. The drill body 11 has a substantially cylindrical basic shape and is made out of steel.

At the portion of the drill body 11, situated behind the cutting inserts, the drill body is provided with axially extending, radially outwardly open flutes 14 and 15, which in cross-section are concavely bent and separately join to respective cutting plate 12 and 13. Said flutes 14, 15 are intended to serve as chip channels and the bars 16 and 17 having a cylindrical envelope surface are situated therebetween. In the embodiments illustrated in Figs. 1-6, said chip channels 14, 15 are helical. Alternatively, the chip channels 14, 15 may have a straight design or a combination thereof. A distance axially behind the cutting plates 12, 13, a damping element has in Fig. 1 been placed on the bar 16 in a corresponding recess. The damping element 18 may be composed of a material of another density than that of the drill body 11. Of importance is that the damping element 18 is arranged in its recess of the bar 16, such that during working, a relative movement of the element 18 and the drill body 11 is allowed, and that the connection of the damping element 18 is such that its envelope surface does not substantially prevent the desired penetration of a hole in the tool of the workpiece 3 in question.

The tool of Fig. 1 is such that the top surface of the damping element 18 becomes situated flush with and with the same shape as the adjacent outer surface of the drill body 11. The damping element 18 has a shape that entirely or partly corresponds with the shape of the outer envelope surface thereof. The damping element 18 may, for instance, be fastened at the drill shank 11 by means of one or several screws 19, 20. Alternatively, the damping element 18 may be connected to the drill body 11 by gluing or vulcanization. Alternatively, the damping elements 16 may be shaped such that they completely or partly are enclosed in a dove-tail shaped cavity formed in the top surface of the drill body. The drill body 11 is, at the axially rear portion thereof, in the common way formed with a rear sectional thickening in the shape of a conical portion 21 which transforms into a rear portion 22.

In the embodiment of Fig. 2, the damping element 18 has an axial, helical extension such that it constitutes a part of the bar 16, but at the same time is formed such that it does not reduce the size of the chip channel 14. Also in this case the damping element 18 may be connected to the drill body 11 by means of one or several screws 19, 20, or be connnected to the drill body 11 by gluing or vulcanization.

In the same manner as regards the embodiment of Fig. 1, the top surface of the damping element 18 corresponds to the envelope surface of the bar 16. It is not necessary that the form of the damping element 18 completely connects to the outer shape of the bar 16. On the contrary, the damping element 18 may e.g. be somewhat recessed in a corresponding recess in the bar 16. In the tool according to Fig. 3A, the damping element 18 extends completely to the front surface of the drill body.

In the tools of Figs. 4-5, alternative arrangements of the damping elements are shown. The damping element of Fig. 4 has the shape of a plate 18a received in a recess in one of the flutes 14 such that its surface corresponds to that of the boundary surface of the flute. The damping elements 18a in Fig_{.} 5 have the shape of plates, recessed in the circumferential direction of the envelope surface of the bars. The damping elements have a convex envelope surface, substantially corresponding to the envelope surface of the bars.

In Figs. 6-7, the elements 18b have the shape of a pin or a tube, fastened in corresponding cavities in the drill body 11 by gluing or vulcanization. Alternatively, a stop member is introduced into the cavity, the stop member preventing the element 18 from starting out of the cavity, while simultaneously allowing the element to move inside the cavity.

Figs. 3B-3C show screwed-on damping elements, the screws 19, 20 being connected to the drill body, while simultaneously allowing a relative movement of the damping element 18 and the drill body 11, respectively.

The cavities adapted to receive the pins 18b may e.g. be the front end of cooling channels arranged in the tool. Between the damping element 18 and the tool body, there may be present a material of e.g. elastomer, polymer, crude rubber or a glue compound and a sealing compound. Also combinations of these materials are possible.

As shown in Figs. 8-9, the damping elements have been given the shape of cylindrical elements 18c, connected inside radial bores 23a, 23b by means of gluing, vulcanization or the like. Alternatively, connection is performed by means of peg devices along or across the element. The peg devices may comprise one or several, completely or partially penetrating pegs.

In Fig. 10, the damping elements have been given the shape of straight cylindrical, tubular pins 18d, received in bores that extend conically outwards in the front portion of the drill bars 16, 17. The tube pins 18d are then received such that they become recessed a distance from the front surface of the drill body, as is apparent from Fig. 10. Alternatively, e.g. a stop member is introduced in the recess, the stop member preventing the element 18 from starting out from the cavity, but at the same time allowing the element to move inside the recess.

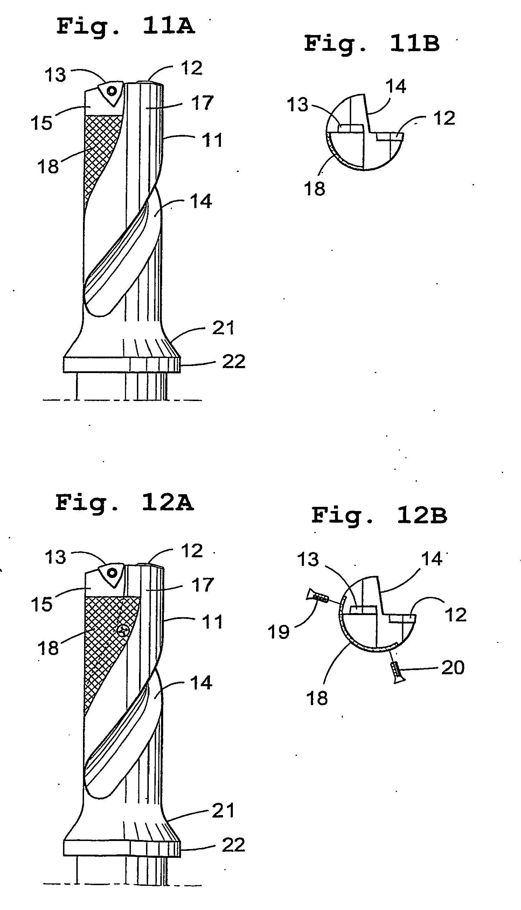

In Figs. 11A-11B, the damping element 18 has been given the shape of a partly cylindrical wall element, which encloses the axial front portion,of the flute 15. The design is then such that the axial extension of the element 18 is finished a distance axially behind the insert pocket that receives the inner cutting insert 13. Alternatively, the element 18 may extend all the way to the front surface of the drill.

In Figs. 12A-12B, the damping element 18 is connected to the drill body by means of screws 19, 20, in accordance with the manner described above.

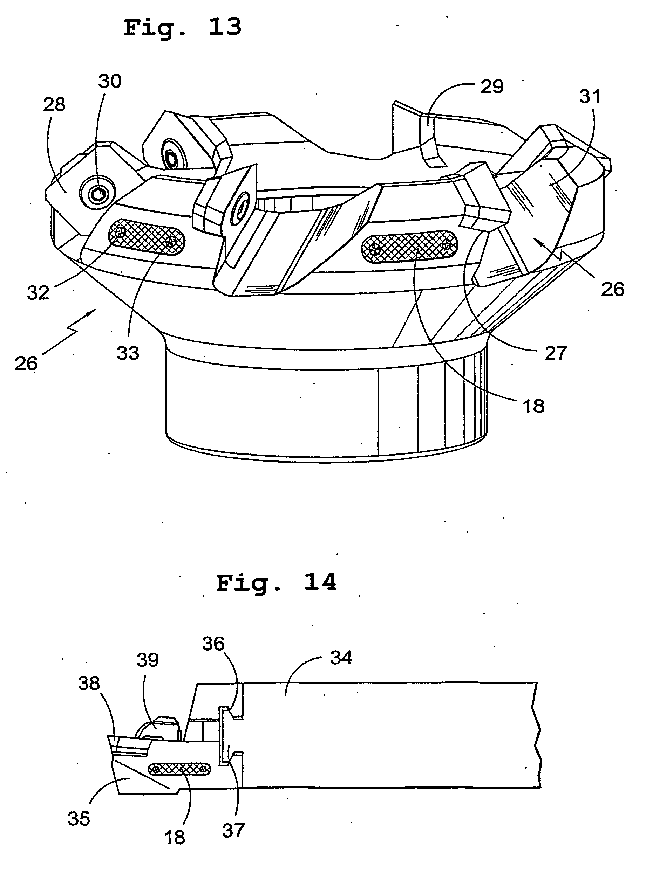

In Fig. 13 is generally shown a milling body 26 with six insert sites 27. In each insert site a mounted cutting insert 28 and a shim 29 are provided which have been tightened in the insert site by means of a locking screw 30. The cutting inserts are in this case functionally inclined with a positive axial angle in the milling body. In the direction of rotation there is in front of each insert provided a milled chip pocket 31. On the envelope surface of the milling body 26, a number of damping elements 18 have been attached by means of screw elements 32, 33, allowing relative movement of the elements 18 and the milling body 26 during the milling operation. As can be seen, the elements 18 are attached to the milling body in positions at an axial distance behind the positions of the cutting inserts. The damping elements 18 constitute discontinuously formed sections of an annular damping element.

For internal turning, the tool shown in Fig. 14 is composed of a bar 34 and a holder body in the form of a cutting head 35 arranged at the front end of the bar. The cutting head 35 is adjustable in a radial direction and is provided with a dove-tail slot 36 encompassing a corresponding tap or tongue 37 of the bar 34. The cutting head is provided with a cutting insert 38, fastened by means of a clamping element 39. The damping element 18 is attached to the exterior surface of the cutting head or is located therein (cf. Figs. 6-10). The damping body may alternatively comprise sand, granulate or a plurality of small bodies being allowed, respectively, to perform a movement relative to the tool. The damping body, or the sand or granulate may completely or partially be surrounded by a rigid, liquid or gaseous medium.

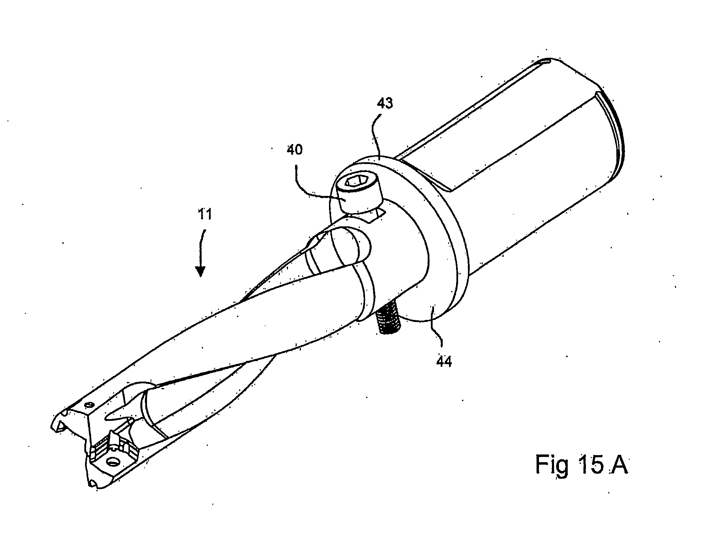

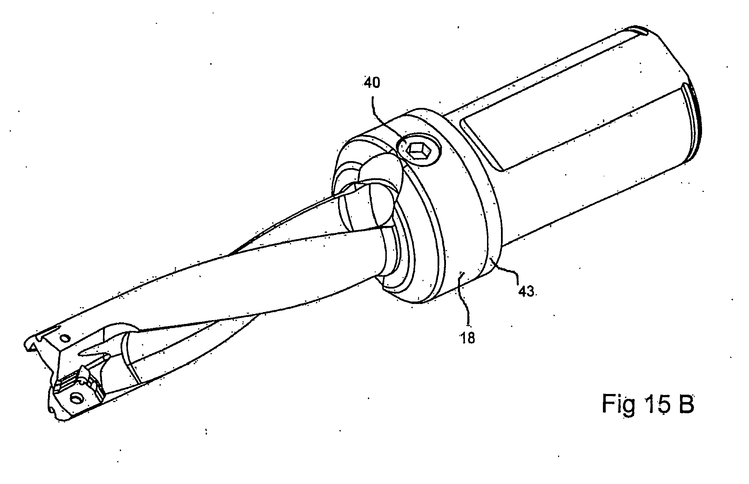

Fig. 15A shows a drill body 11 provided with a radially arranged screw 40. A circular cylindrical surface 42 and a flange having an annular, axially directed surface 44, constitute a seat for an annularly formed damping element 18 (see Fig. 15B). The screw is fastened relative to the drill body, but allows the damping element to perform a movement relative to the drill body.

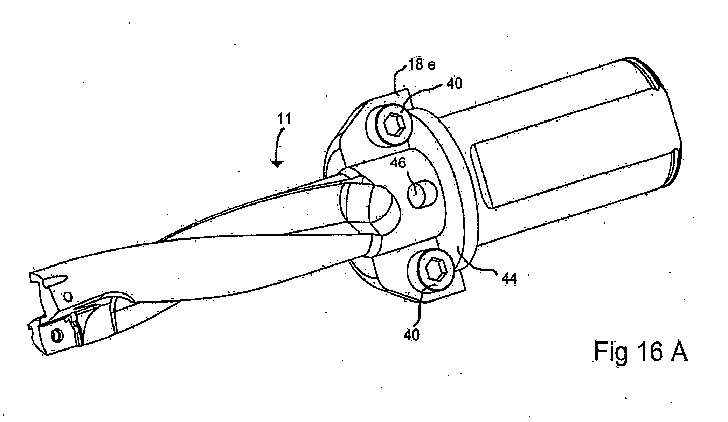

Fig. 16A shows a drill body 11 provided with a semi-annular damping element 18e comprising two radially arranged screws 40.

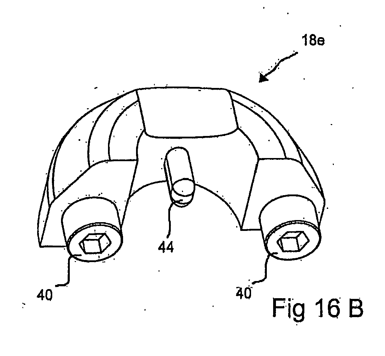

Fig. 16B shows half the damping element 18e provided with a radially directed protrusion 44 adapted to be introduced in a corresponding recess or through-hole in the drill body. The protrusion 44 is preferably arranged centrally between the screws 40.

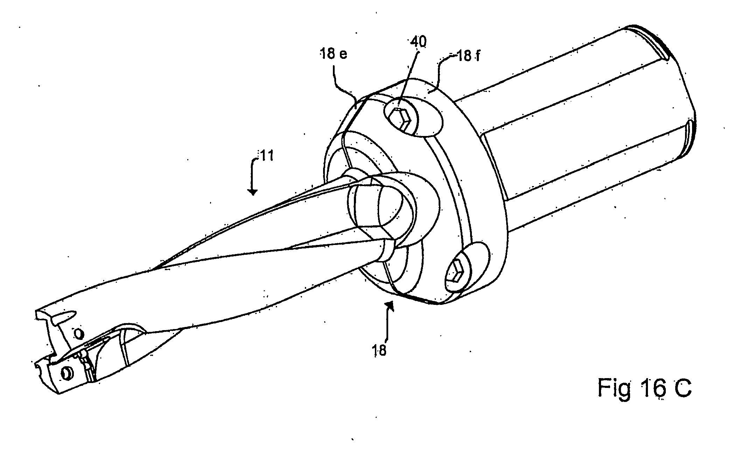

Fig. 16C shows the drill body 11 including the other half of the damping element 18f, together forming an annular damping element 18. Also the half 18f has a protrusion corresponding to be introduced in a thereto corresponding recess or a through-hole 46. When both halves are put in place, they are connected relative to each other by means of the screws 40. The damping element is, however, allowed to perform a movement relative to the drill body, owing to the fact that the protrusion 44 is smaller than the recess or through-hole 46, thus allowing a certain play.

The damping element 18, 18e, 18f, shown in Figs. 15A-15B and 16A-16C, may of course be disconnectably arranged at the drill body 11, however in such a way that a movement relative to the drill body is allowed. In this case the screw or screws 40 are substituted for e.g. a rivet, a glue joint or vulcanization.

Of course, the damping element 18 may comprise more parts than two, as shown in Figs. 16A-16C.

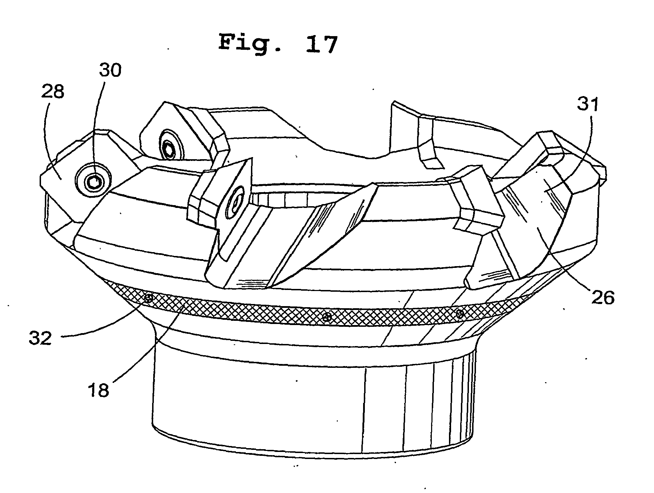

Fig. 17 shows the milling body 26 according to Fig. 13, however with an annular damping element 18 attached to the milling body 26 by means of screws 32, allowing a radial play of the thread in relation to the thread of the mounting hole in the milling body 26, such that the desired relative movement of the damping element 18 and the milling body 26 is achieved.

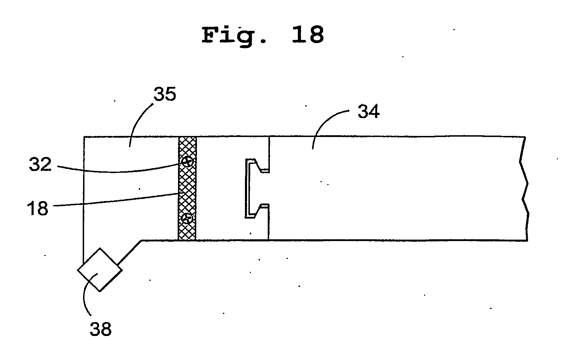

Fig. 18 shows a turning bar corresponding to the one shown in Fig. 14, however with the difference that the damping element 18 has an annular shape and is arranged about the envelope surface of the cutting head 35. The damping element 18 is arranged in a manner corresponding to the discussion in connection with Fig. 17, such that the relative movement of the cutting head 35 and the damping element 18 is achieved.

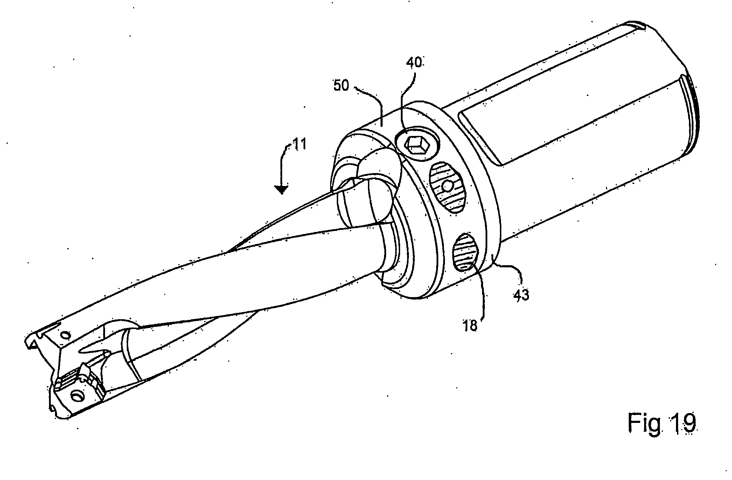

Fig. 19 shows a drill tool of the kind shown in Fig. 15B, however with the difference that an exchange module 50 is disconnectably attached to the drill body 11, i.e. the exchange module 50 cannot perform a movement relative to the drill body 11. The exchange module is provided with one or a plurality of damping elements 18. In accordance with the invention, there are provided a set of exchange modules 50 with different radial extension and/or different inner diameters for different standard sizes of drill tools.

Furthermore, the exchange modules are provided with different number of damping elements 11 and different dimensions thereof, respectively, for achieving different degrees of damping and/or damping frequencies.

The drill bodies shown in Figs. 1-12 and 14-16 may alternatively comprise an end mill, that also have an elongated circular cylindrical basic shape.

Of course, within the scope of the invention, the position of the damping element or damping elements 18 may vary on or inside the milling body, the drill body and the turning bar, respectively.

## Claims

1. A tool for chip removal of metallic materials, comprising a holder body (11, 26, 35), supporting at least one cutting insert for active machining of a workpiece, wherein the holder body (11) is provided with at least one damping element (18) of another or the same material as the holder body (11),
**characterised in that**
- the tool is shaped as a drill body provided in its front end with cutting inserts (12, 13) and at least one along the drill shaft arranged flute (14) from the front end, the damping element (18) being arranged at the drill shaft without substantially penetrating said flute,
- the damping element (18) and the holder body (11, 26, 35) are arranged in relation to each other such that, during machining, a relative movement of the holder body and the damping element is allowed.

2. A tool according to claim 1, wherein, in the space between the damping element (18) and the holder body (11), a joint or a border layer is provided such that a relative movement is allowed of the holder body and the damping element.

3. A tool according to claim 1, wherein the damping element is shaped as an annular member (18), releasably or non-releasably connected to the holder body.

4. A tool according to any one of claims 1 - 3, wherein the damping element comprises sand, granulate or a plurality of small bodies being allowed to perform a relative movement.

5. A damping device adapted to be arranged at a tool according to any one of the preceding claims, **characterised in that** the damping device is shaped as an annular member (18), releasably or non-releasably connected to the holder body.

6. A damping device according to claim 5, wherein it comprises at least two sections (18e, 18f) that in a connected state form said annular member.

7. A damping device according to claim 5, wherein it comprises a single annular damping element.

8. A damping device according to any one of claims 5 to 7, wherein it comprises sand granulate or a plurality of small bodies being allowed to perform a relative movement.

9. A set of parts, comprising a plurality of annular exchange modules (50), each of which being provided with at least one damping device according to any one of claims 5 to 8, **characterised in that** said exchange modules are adapted to fit holder bodies of standard dimensions.

## Patentansprüche

1. Werkzeug für die spanabhebende Bearbeitung metallischer Materialien, mit einem Haltekörper (11, 26, 35), der zumindest einen Schneideinsatz für die aktive Bearbeitung eines Werkstücks trägt, wobei der Haltekörper (11) mit zumindest einem Dämpfungselement (18) ausgestattet ist, das aus einem anderen oder aus demselben Material wie der Haltekörper (11) besteht,
**dadurch gekennzeichnet, daß**
- das Werkzeug als Bohrerkörper geformt ist, welcher an seinem vorderen Ende mit Schneideinsätzen (12, 13) ausgestattet ist, sowie mit mindestens einer entlang des Bohrerschaftes angeordneten Spannut (14), die von dem vorderen Ende ausgeht, wobei das Dämpfungselement (18) an dem Bohrerschaft angeordnet ist, ohne nennenswert in die Spannut einzudringen,
- das Dämpfungselement (18) und der Haltekörper (11, 26, 35) relativ zueinander derart angeordnet sind, daß während der Bearbeitung eine Relativbewegung des Haltekörpers und des Dämpfungselementes zugelassen ist.

2. Werkzeug nach Anspruch 1, wobei in dem Raum zwischen dem Dämpfungselement (18) und dem Haltekörper (11) eine Übergangs- oder Grenzschicht derart vorgesehen ist, daß eine Relativbewegung des Haltekörpers und des Dämpfungselementes zugelassen wird.

3. Werkzeug nach Anspruch 1, wobei das Dämpfungselement als ein ringförmiges Teil (18) geformt ist, welches lösbar oder nicht lösbar mit dem Haltekörper verbunden ist,

4. Werkzeug nach einem der Ansprüche 1 bis 3, wobei das Dämpfungselement Sand, Granulat oder eine Mehrzahl kleiner Teilchen aufweist, die eine Relativbewegung ausführen können.

5. Dämpfungselement, welches dafür ausgelegt ist, an einem Werkzeug nach einem der vorstehenden Ansprüche angeordnet zu werden, **dadurch gekennzeichnet, daß** das Dämpfungselement als ein ringförmiges Teil (18) ausgebildet ist, welches lösbar oder nicht lösbar mit dem Haltekörper verbunden ist.

6. Dampfungsehnchtung nach Anspruch 5, wobei sie zumindest zwei Abschnitte (18e, 18f) aufweist, die im miteinander verbundenen Zustand ein ringförmiges Teil bilden.

7. Dämpfungseinrichtung nach Anspruch 5, wobei sie ein einzelnes, ringförmiges Dämpfungselement aufweist.

8. Dämpfungselement nach einem der Ansprüche 5 bis 7, wobei sie Sand, Granulat oder eine Mehrzahl kleiner Teilchen aufweist, die eine Relativbewegung ausführen können.

9. Ein Satz aus Teilen, welche eine Mehrzahl ringförmiger Austauschmodule (50) aufweisen, von denen jeder mit zumindest einem Dämpfungselement nach einem der Ansprüche 5 bis 8 ausgestattet ist, **dadurch gekennzeichnet, daß** die Austauschmodule dafür ausgelegt sind, auf Haltekörper mit Standardmaßen zu passen.

## Revendications

1. Outil pour l'enlèvement de copeaux de matériaux métalliques, comprenant un corps de support (11, 26, 35), supportant au moins un élément de coupe pour un usinage actif d'une pièce à usiner, dans lequel le corps de support (11) est doté d'au moins un élément d'amortissement (18) en un autre ou en le même matériau que le corps de support (11),
**caractérisé en ce que**
- l'outil est en forme de corps de foret doté, en son extrémité avant, d'éléments de coupe (12, 13), et d'au moins une goujure située le long du fût du foret (14) depuis l'extrémité avant, l'élément d'amortissement (18) étant disposé sur le fût du foret, sans pénétrer sensiblement dans ladite goujure,
- l'élément d'amortissement (18) et le corps de support (11, 26, 35) sont disposés l'un par rapport à l'autre de façon à ce que, pendant l'usinage, un mouvement relatif du corps de support et de l'élément d'amortissement soit autorisé.

2. Outil selon la revendication 1, dans lequel, dans l'espace entre l'élément d'amortissement (18) et le corps de support (11), est installé un joint ou une couche de bordure, de façon à ce qu'un mouvement relatif du corps de support et de l'élément d'amortissement soit autorisé.

3. Outil selon la revendication 1, dans lequel l'élément d'amortissement est en forme d'élément annulaire (18), relié, de manière amovible ou inamovible, au corps de support.

4. Outil selon l'une quelconque des revendications 1 à 3, dans lequel l'élément d'amortissement comprend du sable, des granulés, ou une pluralité de petits corps autorisés à effectuer un mouvement relatif.

5. Dispositif d'amortissement agencé pour être disposé sur un outil selon l'une quelconque des revendications précédentes, **caractérisé en ce que** le dispositif d'amortissement est en forme d'élément annulaire (18), relié, de manière amovible ou inamovible, au corps de support.

6. Dispositif d'amortissement selon la revendication 5, comprenant au moins deux parties (18e, 18f) qui, dans un état de liaison, forment ledit élément annulaire.

7. Dispositif d'amortissement selon la revendication 5, comprenant un seul élément d'amortissement annulaire.

8. Dispositif d'amortissement selon l'une quelconque des revendications 5 à 7, comprenant du sable, des granulés ou une pluralité de petits corps pouvant effectuer un mouvement relatif.

9. Kit de pièces, comprenant une pluralité de modules annulaires amovibles (50), chacun d'entre eux comportant au moins un dispositif d'amortissement selon l'une quelconque des revendications 5 à 8, **caractérisé en ce que** lesdits modules amovibles sont agencés pour adapter des corps de support de dimensions standards.
